# EUROPÄISCHE PATENTSCHRIFT

(11) **EP 1 080 356 B1**
(45) Veröffentlichungstag und Bekanntmachung des Hinweises auf die Patenterteilung: **16.02.2005**
(21) Anmeldenummer: 99934469.0
(22) Anmeldetag: 11.05.1999
(51) Int. Cl.: G01M 17/04

(54) **RADAUFHÄNGUNGS-TESTER**
WHEEL SUSPENSION TESTER
DISPOSITIF D'ESSAI DE SUSPENSION DE ROUE

(30) Priorität: 18.05.1998 DE 19823373
(43) Veröffentlichungstag der Anmeldung: 07.03.2001
(73) Patentinhaber: ROBERT BOSCH GMBH, 70442 Stuttgart (DE)
(72) Erfinder: ANLAUF, Juergen, D-73035 Göppingen (DE); GERN, Christian, D-73249 Wernau (DE); FISCHER, Uwe, D-71409 Schwaikheim (DE); HOSS, Reinhard, D-73207 Plochingen (DE)
(74) Vertreter: Brommer, Hans Joachim, Dr.-Ing.
(86) Internationale Anmeldenummer: PCT/DE1999/001416
(87) Internationale Veröffentlichungsnummer: WO 1999/060367

(56) Entgegenhaltungen:
- EP-A- 0 476 746
- WO-A-94/02825
- DE-A- 2 337 411
- DE-A- 2 556 073

## Beschreibung

### Stand der Technik

Die Erfindung betrifft einen Radaufhängungs-Tester mit wenigstens einem Motor, der eine Welle antreibt, wobei der Welle ein Exzenter zugeordnet ist, der eine Radaufnahme in vertikale Schwingbewegungen versetzt, wobei die Radaufnahme zur Aufnahme eines Rades eines Kraftfahrzeuges dient und über einen Kraftaufnahme-Sensor abgestützt ist und wobei der Radaufnahme eine Rückhaltevorrichtung zugeordnet ist, die ein unkontrolliertes Abheben der Radaufnahme von dem Exzenter verhindert.

Bei derartigen Radaufhängungs-Testern ist die Radaufnahme einem Gestell zugeordnet. Dieses kann über einen Exzenter zu Schwingungen angeregt werden. Um zu verhindern, daß das Gestell unkontrolliert von dem Exzenter abhebt, sind Federelemente verwendet. Diese halten das Gestell zwangsweise an dem Exzenter. Die Federelemente beeinflussen die sinusförmige Anregung des Gestelles, da sie die Gestell-Aufwärtsbewegung verzögern, bei der Abwärtsbewegung aber beschleunigend wirken.

Aus der DE 25 56 073 A1 ist ein weiteren Radaufhängungs-Tester bekannt. Die als Platte ausgebildete Radaufnahme ist hierbei an einem Gehäuse angebracht, das an zwei zueinander parallelen Blattfedern aufgehangen ist. In dem Gehäuse ist eine Welle drehbar gelagert. Die Welle ist über eine Kardanwelle an einen Motor angekoppelt. Auf der Welle sind zwei Exzenter befestigt. Wird nun die Welle über den Motor in Drehbewegung versetzt, so erzeugen die Exzenter eine Unwucht und veranlassen das Gehäuse zum Schwingen. Die Blattfedern verhindern ein unkontrolliertes Abheben des Gehäuses, insbesondere bei hohen Rotationsgeschwindigkeiten.

Eine weitere alterative Technik ist aus der DE-A-2 337 411 bekannt.

Es ist Aufgabe der Erfindung, einen Radaufhängungs-Tester der eingangs erwähnten Art zu schaffen, der einen einfachen Aufbau aufweist und der eine Beeinflussung der Anregung durch die Rückhaltevorrichtung zuverlässig ausschließt.

Diese Aufgabe wird dadurch gelöst, daß die Rückhaltevorrichtung als Gehäuse ausgebildet ist, das eine Aufnahmebohrung aufweist, in der der Exzenter mit geringem vertikalen Spiel umläuft.

Mit einem solchen Aufbau wird die Anregung nicht beeinflußt, da der Schwingbewegung mittels der Rückhaltevorrichtung keine Energie entzogen oder zugeführt wird. Damit kann die vom Exzenter erzeugte sinusförmige Anregung unmittelbar und ungestört in die Radaufnahme eingebracht werden. Das Abheben der Radaufnahme wird mit dem Gehäuse zuverlässig verhindert, da der Exzenter zwangsweise in der Aufnahmebohrung geführt ist.

Nach einer bevorzugten Ausgestaltungsvariante der Erfindung ist es vorgesehen, daß die Bohrungsachse der Aufnahmebohrung mit der Rotationsachse der Welle fluchtet, und daß der Bohrungsdurchmesser gleich oder geringfügig größer ist als die quer zur Rotationsachse verlaufende Abmessung des Exzenters. Um einen kostengünstigen Aufbau für den Radaufhängungs-Tester verwirklichen zu können, sieht die Erfindung vor, daß das Gehäuse die Radaufnahme über den einen Kraftaufnahme-Sensor abstützt, wobei der Kraftaufnahme-Sensor die Radaufnahme im Bereich des Krafteinleitungszentrums unterfängt. Im Gegensatz zu den gängigen Radaufhängungs-Testern kann mit der erfindungsgemäßen Anordnung des Gehäuses eine zuverlässige Meßwertaufnahme mit nur einem Kraftaufnahme-Sensor erfolgen.

Der Kraftaufnahme-Sensor wird in diesem Fall bevorzugt als seitenkraft-unempfindlicher Scherkraft-Sensor ausgebildet sein.

Um eine stabile Aufhängung der Radaufnahme zu erreichen, sieht eine Erfindungsvariante vor, daß das Gehäuse an einem Träger angekoppelt ist, der über zwei oder vier Hebel schwingengelagert ist, wobei die Gelenkpunkte der Hebel ein Parallelogramm-Viergelenksystem bilden.

Ein geringer konstruktiver Aufwand mit entsprechenden Kostenvorteilen ergibt sich zusätzlich dann, wenn vorgesehen ist, daß für die beiden Räder einer Radachse zwei voneinander getrennte Radaufnahmen verwendet sind, die von einem Motor gleichzeitig zu gleich- oder gegenphasigen Schwingungen angeregt werden.

Die Erfindung wird im Folgenden anhand eines in den Zeichnungen dargestellten Ausführungsbeispieles näher erläutert. Es zeigen:
Fig. 1 in schematischer Darstellung und in Seitenansicht einen Schnitt durch einen Radaufhängungs-Tester und
Fig. 2 einen in Fig. 1 mit II-II gekennzeichneten Schnittverlauf.

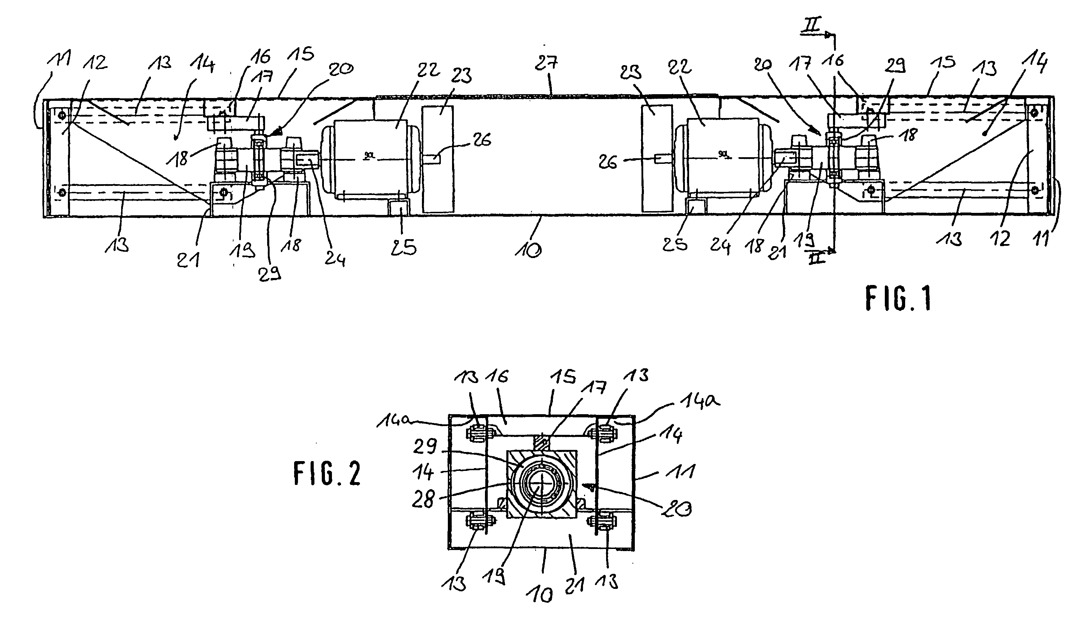

In der Fig. 1 ist ein Radaufhängungs-Tester gezeigt, mit dem eine Aussage über den Verschleißzustand der Stoßdämpfer eines Kraftfahrzeuges getroffen werden kann. Der Radaufhängungs-Tester weist ein Gehäuse mit einem Boden 10 und davon vertikal aufsteigenden Seitenteilen 11 auf. An die Seitenteile 11 sind Aufhängungen 12 angekoppelt. Die Aufhängungen 12 weisen Gelenkpunkte auf, an denen vier Hebel 13 angekoppelt sind. Die Hebel 13 stehen zueinander parallel. An ihren der Aufhängung 12 abgekehrten Enden sind die Hebel 13 wiederum über Gelenke 13 an einen Träger 14 angebunden. Die Gelenkpunkte des Trägers 14 und der Aufhängung 12 jeweils zweier Hebel 13 bilden ein Parallelogramm-Viergelenksystem. Wie die Fig. 2 erkennen läßt, weisen die Träger 14 horizontale Flansche 14a auf, auf die eine Platte aufgelegt ist. Die Platte dient als Radaufnahme 15 und ist mit den Flanschen 14a verschraubt. Unter der Platte ist eine Strebe 16 festgemacht. Die Strebe 16 trägt einen Kraftaufnahme-Sensor 17.

Auf dem Boden 10 des Gehäuses ist ein Motorhalter 25 angeschweißt. Der Motorhalter 25 trägt einen Motor 22. Die Antriebswelle 24 des Motors 22 ist drehfest mit einer Welle 19 verbunden. Die Welle 19 ist über zwei Lagerblöcke 18 an einer Halterung 21 fixiert. Die Halterung 21 wiederum ist mit dem Boden 10 verbunden. Die Welle 19 trägt zwischen den Lagerblöcken 18 einen Exzenter 29, der in einem Gehäuse 20 umläuft. Das Gehäuse 20 ist mit dem Kraftaufnahme-Sensor 17 verschraubt.

Wie die Fig. 2 erkennen läßt, besitzt das Gehäuse 20 eine Aufnahmebohrung 28, in der der Exzenter 29 koaxial zur Bohrungsachse umläuft. Die Aufnahmebohrung 28 ist dabei so dimensioniert, daß der Exzenter 29 hierin mit einem geringfügigen vertikalen Spiel umlaufen kann.

Wie Fig. 1 erkennen läßt, tragen die Motoren 22 an Wellen-Zapfen 26 jeweils eine Schwungmasse 23. Der Wellen-Zapfen 26 ist starr mit der Antriebswelle 24 gekoppelt. Um Zugang zu den Motoren 22 und den Schwungmassen 23 zu erhalten, ist eine abnehmbare Abdeckplatte 27 vorgesehen, die oberseitig den Randaufhängungs-Tester abschließt.

Zur Durchführung eines Testlaufes wird ein Kraftfahrzeug mit seinen beiden Rädern einer Radachse auf die Platten aufgestellt. Die Räder stehen dabei etwa mittig und im Bereich der Strebe 16 auf der Platte auf. Anschließend können die Wellen 19 über die Motoren 22 in Rotationsbewegung versetzt werden. Dabei lenkt der Exzenter 29 das Gehäuse 20 aus, so daß die Platte zu sinusförmigen Schwingungen veranlaßt wird. Der Motor 22 wird so angesteuert, daß sich für die Platte eine Schwingungsfrequenz von ca. 25 Hz ergibt. Anschließend werden die Motoren 22 abgeschalten. Aufgrund der Schwungmassen 23 bleibt die Rotationsbewegung der Antriebswellen 19 jedoch erhalten, so daß die Platten langsam ausschwingen. Bei diesem Ausschwingen durchlaufen die Platten das Frequenzband bis hinunter zu 3 Hz. Die in diesem Frequenzband vorhandenen Resonanzfrequenzen werden ermittelt und die dabei im Kraftaufnahme-Sensor gemessene dynamische Aufstands-Kraft des Rades ausgewertet. Diese dynamische Aufstands-Kraft wird zu der statischen Aufstands-Kraft des Rades in Bezug gesetzt. Hieraus läßt sich dann ein Rückschluß auf die Stoßdämpferqualität ziehen.

Während der Schwingung der Platte verhindert das Gehäuse 20 ein Abheben der Platte.

## Patentansprüche

1. Radaufhängungs-Tester mit wenigstens einem Motor, der eine Welle antreibt, wobei der Welle ein Exzenter zugeordnet ist, der eine Radaufnahme in vertikale Schwingbewegungen versetzt, wobei die Radaufnahme zur Aufnahme eines Rades eines Kraftfahrzeuges dient und über einen Kraftaufnahme-Sensor abgestützt ist und wobei der Radaufnahme eine Rückhaltevorrichtung zugeordnet ist, die ein unkontrolliertes Abheben der Radaufnahme von dem Nocken verhindert, wobei die Rückhaltevorrichtung als Gehäuse (20) ausgebildet ist, das eine Aufnahmebohrung (28) aufweist,
**dadurch gekennzeichnet,**
**daß** in der Aufnahmebohrung (28) der Exzenter (29) mit geringem vertikalen Spiel umläuft.

2. Radaufhängungstester nach Anspruch 1,
**dadurch gekennzeichnet,**
**daß** die Bohrungsachse der Aufnahmebohrung (28) mit der Rotationsachse der Welle (19) fluchtet, und
**daß** der Bohrungsdurchmesser gleich oder geringfügig größer ist als die quer zur Rotationsachse verlaufende Abmessung des Exzenters (29).

3. Radaufhängungs-Tester nach Anspruch 1 oder 2,
**dadurch gekennzeichnet,**
**daß** das Gehäuse (20) über den einen Kraftaufnahme-Sensor (17) die Radaufnahme (15) abstützt, wobei der Kraftaufnahme-Sensor (17) die Radaufnahme (15) im Bereich des Krafteinleitungszentrums unterfängt.

4. Radaufhängungs-Tester nach einem der Ansprüche 1 bis 3, **dadurch gekennzeichnet,**
**daß** das Gehäuse (20) an einen Träger (14) angekoppelt ist, der über zwei oder vier parallele Hebel (13) schwingend gelagert ist, wobei die Gelenkpunkte der Hebel ein Parallelogrmann-Viergelenksystem bilden.

5. Radaufhängungs-Tester nach einem der vorhergehenden Ansprüche, **dadurch gekennzeichnet,**
**daß** der Kraftaufnahme-Sensor (17) als seitenkraftunempfindlicher Scherkraft-Sensor ausgebildet ist.

6. Radaufhängungs-Tester nach einem der Ansprüche 1 bis 5, **dadurch gekennzeichnet,**
**daß** für die beiden Räder einer Radachse zwei voneinander getrennte Radaufnahmen (15) verwendet sind, die von einem Motor (22) gleichzeitig zu gleich- oder gegenphasigen Schwingungen angeregt werden.

## Claims

1. Wheel suspension tester having at least one motor which drives a shaft, the shaft being associated with an eccentric which causes a wheel support to perform vertical oscillating movements, the wheel support serving to receive a wheel of a motor vehicle and being supported by way of a force sensor, and the wheel support being associated with a retaining device which prevents uncontrolled lifting of the wheel support away from the cam, the retaining device being in the form of a housing (20) which has a receiving bore (28),
**characterised in that**
the eccentric (29) rotates in the receiving bore (28) with little vertical play.

2. Wheel suspension tester according to claim 1,
**characterised in that**
the bore axis of the receiving bore (28) is in alignment with the axis of rotation of the shaft (19), and the bore diameter is the same as or slightly greater than the dimension of the eccentric (29) transverse to the axis of rotation.

3. Wheel suspension tester according to claim 1 or 2,
**characterised in that**
the housing (20) supports the wheel support (15) by way of the one force sensor (17), the force sensor (17) underpinning the wheel support (15) in the region of the centre of force introduction.

4. Wheel suspension tester according to any one of claims 1 to 3,
**characterised in that**
the housing (20) is coupled to a bar (14) which is mounted so as to oscillate by way of two or four parallel levers (13), the articulation points of the levers forming a parallelogram four-bar linkage system.

5. Wheel suspension tester according to any one of the preceding claims,
**characterised in that**
the force sensor (17) is in the form of a shear force sensor that is insensitive to lateral force.

6. Wheel suspension tester according to any one of claims 1 to 5,
**characterised in that**
for the two wheels of a wheel axle there are used two wheel supports (15) which are separate from one another and which are simultaneously caused by a motor (22) to perform in-phase or out-of-phase oscillations.

## Revendications

1. Testeur de suspension de roue comprenant au moins un moteur entraînant un arbre, un excentrique étant associé audit arbre, qui fait osciller verticalement un support de roue, le support de roue étant destiné à recevoir une roue de véhicule automobile et prenant appui sur un capteur de charge, et un dispositif de retenue étant associé au support de roue, qui empêche le support de roue de se soulever de manière incontrôlée de la came, le dispositif de retenue étant réalisé sous forme de boîtier (20) doté d'un perçage de réception (28), **caractérisé en ce que** l'excentrique (29) tourne dans le perçage de réception (28) avec un faible jeu vertical.

2. Testeur de suspension de roue selon la revendication 1, **caractérisé en ce que** l'axe du perçage de réception (28) est en alignement avec l'axe de rotation de l'arbre (19), et **en ce que** le diamètre du perçage est égal ou légèrement supérieur à la dimension de l'excentrique (29) mesurée transversalement à l'axe de rotation.

3. Testeur de suspension de roue selon la revendication 1 ou 2, **caractérisé en ce que** le boîtier (20) supporte le support de roue (15) par l'intermédiaire de l'un des capteurs de charge (17), sachant que le capteur de charge (17) soutient le support de roue (15) dans la zone du centre d'application de la charge.

4. Testeur de suspension de roue selon l'une des revendications 1 à 3, **caractérisé en ce que** le boîtier (20) est accouplé à un support (14) qui est monté par le biais de deux ou quatre leviers parallèles (13) de façon à osciller, les points d'articulation des leviers formant un système en parallélogramme à quatre joints articulés.

5. Testeur de suspension de roue selon l'une des revendications précédentes, **caractérisé en ce que** le capteur de charge (17) est réalisé en tant que capteur de forces de cisaillement insensible aux efforts latéraux.

6. Testeur de suspension de roue selon l'une des revendications 1 à 5, **caractérisé en ce que** l'on utilise deux supports de roue (15) séparés l'un de l'autre pour les deux roues d'un essieu, lesquels sont soumis simultanément à des oscillations en phase ou en opposition de phase par un moteur (22).
